# EUROPÄISCHE PATENTSCHRIFT

(11) **EP 3 465 795 B1**
(45) Veröffentlichungstag und Bekanntmachung des Hinweises auf die Patenterteilung: **28.07.2021**
(21) Anmeldenummer: 17729815.5
(22) Anmeldetag: 29.05.2017
(51) Int. Cl.: H01M 50/218, H01M 50/209

(54) **GEHÄUSE FÜR EINE FAHRZEUGBATTERIE SOWIE VERFAHREN ZUR HERSTELLUNG EINES SOLCHEN GEHÄUSES**
HOUSING FOR A VEHICLE BATTERY, AND METHOD FOR MANUFACTURING A HOUSING OF SAID TYPE
BOÎTIER POUR BATTERIE DE VÉHICULE ET PROCÉDÉ DE FABRICATION D'UN TEL BOÎTIER

(30) Priorität: 03.06.2016 DE 102016110330
(43) Veröffentlichungstag der Anmeldung: 10.04.2019
(73) Patentinhaber: ThyssenKrupp Steel Europe AG, 47166 Duisburg (DE); thyssenkrupp AG, 45143 Essen (DE)
(72) Erfinder: HILFRICH, Erik, 40470 Düsseldorf (DE); BREIDENBACH, Andreas, 50321 Brühl (DE)
(74) Vertreter: ThyssenKrupp Steel Europe AG
(86) Internationale Anmeldenummer: PCT/EP2017/062922
(87) Internationale Veröffentlichungsnummer: WO 2017/207503

(56) Entgegenhaltungen:
- CN-U- 204 651 375
- FR-A1- 2 961 443
- US-A1- 2010 307 848
- US-A1- 2011 143 179
- US-A1- 2013 273 398
- US-A1- 2014 030 563
- US-A1- 2014 093 765
- PING HU ET AL: "Front crash simulation and design improvement of a pure electric vehicle", ELECTRICAL AND CONTROL ENGINEERING (ICECE), 2011 INTERNATIONAL CONFERENCE ON, IEEE, 16 September 2011 (2011-09-16), pages 1085-1088, XP031960598, DOI: 10.1109/ICECENG.2011.6057986 ISBN: 978-1-4244-8162-0
- Anonymous: "Outokumpu and Fraunhofer Institute develop lightweight stainless steel battery pack for EVs; up to 20% weight reduction - Green Car Congress", , 19 April 2016 (2016-04-19), XP055710235, Retrieved from the Internet: URL:https://www.greencarcongress.com/2016/ 04/20160419-outokumpu.html [retrieved on 2020-06-30]
- HYUNWOO SO ET AL: "An investigation of the blanking process of the quenchable boron alloyed steel 22MnB5 before and after hot stamping process", JOURNAL OF MATERIALS PROCESSING TECHNOLOGY, ELSEVIER, NL, vol. 212, no. 2, 11 October 2011 (2011-10-11), pages 437-449, XP028119939, ISSN: 0924-0136, DOI: 10.1016/J.JMATPROTEC.2011.10.006 [retrieved on 2011-10-19]

## Beschreibung

### Stand der Technik

Gehäuse für Fahrzeugbatterien sind allgemein bekannt. An derartige Gehäuse bestehen vielfältige Anforderungen, so müssen sie das Gewicht der üblicherweise in Modulen zusammengefassten Batteriezellen tragen, eine Befestigung an der Fahrzeugkarosserie ermöglichen, die Batterie vor Beschädigungen im Falle eines Unfalls bzw. sonstigen Fahrzeugschäden schützen, sie müssen wasserdicht sein, gleichzeitig aber Anbindungen für elektrische Anschlüsse sowie Heizung bzw. Kühlung der Batterie ermöglichen, Gase ggf. über ein Überdruckventil aus dem Gehäuse leiten und möglichst wartungsfrei sein während der Lebensdauer der Batterie, sowie im Reparaturfall eine Demontage der Batterie ermöglichen.

Um diesen Anforderungen zu genügen, sind die bekannten Gehäuse komplex aufgebaut, sind teuer in der Herstellung und weisen ein hohes Gewicht auf.

Da die Anforderungen an die Reichweite der Batterien steigen, werden die Batterien zudem stetig mehr Bauraum beanspruchen, was erhöhte Anforderungen an die Stabilität nach sich zieht und das Gewicht weiter steigert. So sind für eine weitgehende Elektromobilität mit höheren Reichweiten der Elektrofahrzeuge, wie sie seitens der Politik gefordert wird, Batterien mit einer Kapazität größer als 20kWh und einem Gewicht von mehr als 200kg erforderlich.

Aus dem Stand der Technik sind Gehäuse für Fahrzeugbatterien und entsprechende Verfahren zu deren Herstellung bekannt, so zum Beispiel aus den Offenlegungsschriften US 2014/030563 A1, US 2011/143179 A1, FR 2961443 A1, US 2013/273398 A1, US 2014/093765 A1, US 2010/307848 A1, CN 204 651 375 U; Ping Hu et. al., "Front crash simulation and design improvement of a pure electric vehicle", 2011 International Conference on Electrical and Control Engineering (ICECE), IEEE, Seiten 1085-1088; und "Outokumpu and Fraunhofer Institute develop stainless steel battery pack for EVs; up to 20% weight reduction - Green Car Congress", gefunden im Internet: https://www.greencarcongress.com/2016/04/20160419-outokumpu.html [gefunden am 2020-06-30].

### Offenbarung der Erfindung

Es ist also eine Aufgabe der vorliegenden Erfindung ein Gehäuse für eine Batterie zur Verfügung zu stellen, welches wirtschaftlich herzustellen, bauraumgünstig, leicht, wasserdicht, demontierbar und crashsicher ist.

Gelöst wird diese Aufgabe mit einem Gehäuse für eine Fahrzeugbatterie gemäß Anspruch 1, mit einer Deckelplatte und einer Bodenplatte, wobei zwischen der Deckelplatte und der Bodenplatte ein Rahmen angeordnet ist, wobei der Rahmen mit der Deckelplatte und der Bodenplatte verbunden ist, wobei in dem vom Rahmen umschlossenen Raum wenigstens ein Querträgerelement angeordnet ist und wobei der Rahmen (4) als Rollprofil und/oder Kantteil ausgebildet ist, wobei der Rahmen (4) mehrteilig ausgebildet ist.

Das erfindungsgemäße Gehäuse hat gegenüber dem Stand der Technik den Vorteil, dass das Gehäuse in einfacher Weise montierbar und demontierbar ist, wenig Bauraum beansprucht, wasserdicht ist und gleichzeitig eine hohe Stabilität, insbesondere im Crashfall, und ein geringes Gewicht aufweist. Das Gehäuse ist vorzugsweise für den Einsatz in Elektrofahrzeugen, insbesondere in reinen Elektrofahrzeugen (engl. "battery electric vehicle", BEV), Elektrofahrzeugen mit Reichweitenverlängerern (engl. "range extended electric vehicle", REEV), Plug-In-Hybridfahrzeugen (PHEV) und/oder Hybridfahrzeugen (HEV) vorgesehen. In vorteilhafter Weise stellt die vorliegende Erfindung ein modulares Batteriegehäuse bereit, das in verschiedene Karosserien integriert werden kann. Der Rahmen ist als ein- oder mehrteiliges Rollprofil und/oder Kantteil ausgebildet, insbesondere als C-Profil. Besonders bevorzugt weist der Rahmen ein querschnittsveränderliches Profil auf. Ganz besonders bevorzugt weist der Rahmen eine Festigkeit von wenigstens 400 MPa auf, insbesondere ist der Rahmen aus einem Stahl mit einer Festigkeit von wenigstens 400 MPa gefertigt. Der Fachmann versteht, dass mit Festigkeit die Zugfestigkeit gemeint ist. Hierdurch ist es vorteilhaft möglich, einen stabilen Rahmen bereitzustellen, der in einfacher Weise hergestellt werden kann und wobei über die Länge in einfacher Weise die Größe des Batteriegehäuses skaliert werden kann. Vorzugsweise ist vorgesehen, dass der Rahmen im Wesentlichen rechteckförmig ausgebildet ist, wobei der Rahmen besonders bevorzugt an den Ecken wenigstens teilweise gebogen ist. Hierdurch kann die Stabilität des Rahmens in besonders vorteilhafter Weise weiter erhöht werden. Weiterhin ist bevorzugt vorgesehen, dass das Querträgerelement als Rollprofil und/oder als Kantteil ausgebildet ist, besonders bevorzugt weist das Querträgerelement dabei einen im Wesentlichen rechteckigen und/oder hutförmigen Querschnitt auf. Ganz besonders bevorzugt ist das Querträgerelement aus einem höherfesten metallischen Blech, insbesondere einem höherfesten Stahl, mit einer Festigkeit von wenigstens 400 MPa gefertigt. Der Fachmann versteht, dass je nach Größe des Batteriegehäuses mehrere Querträger vorgesehen sein können, die insbesondere zusammen mit dem Rahmen, der Deckelplatte und der Bodenplatte mehrere Zellen zur Aufnahme von Batteriemodulen bilden. Gemäß einer bevorzugten Ausführungsform ist vorgesehen, dass die Deckelplatte aus einem metallischen Blech gefertigt sind. Besonders bevorzugt ist die Deckelplatte einem Metall-Kunststoff-Sandwichmaterial, insbesondere einem Stahl-Kunststoff- und/oder Aluminium-Kunststoff-Sandwichmaterial, gefertigt. Erfindungsgemäß ist die Bodenplatte aus einem hochfesten metallischen Werkstoff mit einer Festigkeit von wenigstens 780 MPa gefertigt, nämlich aus ultrahochfestem Stahl. Erfindungsgemäß wird als ultrahochfester Stahl gehärteter Mangan-Bor-legierter Stahl verwendet. Noch mehr bevorzugt weist die Bodenplatte und/oder die Deckelplatte Erhöhungen und/oder Vertiefungen zur Steigerung der Steifigkeit auf. Insbesondere sind die Erhöhungen und/oder Vertiefungen als Sicken ausgeführt. Hierdurch wird vorteilhafterweise ein Batteriegehäuse bereitgestellt, welches zum einen sehr stabil ist, insbesondere auch im Crashfall oder bei Beschädigungen des Fahrzeugs, insbesondere durch die Überfahrt von Hindernissen, und zum anderen auch ein geringes Gewicht aufweist, wodurch das Gesamtgewicht des Fahrzeugs gering gehalten und somit die erzielbare Reichweite erhöht wird. Vorzugsweise ist an wenigstens einer Stelle ein Abstandshaltemittel zwischen dem Querträgerelement und der Deckelplatte und/oder zwischen dem Querträgerelement und der Bodenplatte vorgesehen. Besonders bevorzugt ist das Abstandshaltemittel einstückig mit dem Querträgerelement vorgesehen. Hierdurch wird die Stabilität des Gehäuses in vorteilhafter Weise weiter gesteigert.

Vorteilhafte Ausgestaltungen und Weiterbildungen der Erfindung können den Unteransprüchen, sowie der Beschreibung unter Bezugnahme auf die Zeichnungen entnommen werden.

Gemäß einer bevorzugten Ausführungsform der vorliegenden Erfindung ist vorgesehen, dass der Rahmen erste Anbindungsstellen zur Anbindung an eine Fahrzeugkarosserie aufweist, wobei der Rahmen vorzugsweise wenigstens einen Flansch aufweist, wobei die ersten Anbindungsstellen insbesondere an dem Flansch vorgesehen sind. Hierdurch wird in vorteilhafter Weise eine einfache und stabile Anbindung an die Fahrzeugkarosserie ermöglicht. Eine Befestigung mit der Fahrzeugkarosserie kann dabei insbesondere über Befestigungsmittel wie Schrauben und/oder Nieten erfolgen. Besonders bevorzugt sind an den ersten Anbindungsstellen Verstärkungselemente, insbesondere Bleche oder Ringe, vorgesehen. Der Fachmann versteht, dass, falls die Befestigung über Löcher erfolgt, diese insbesondere größer sind als die Befestigungsmittel, um somit einen Toleranzausgleich zu ermöglichen. Ganz besonders bevorzugt sind im Bereich der ersten Anbindungsstellen Verstärkungselemente vorgesehen, wobei die Verstärkungselemente vorzugsweise im Rahmen angeordnete diagonale Bleche und/oder Schottbleche sind. Diagonale Bleche sind dabei insbesondere Bleche, die im Querschnitt des Rahmens diagonal und mit ihrer Haupterstreckungsrichtung parallel zu der Haupterstreckungsrichtung des Rahmens angeordnet sind. Schottbleche sind insbesondere Bleche, welche senkrecht zur Haupterstreckungsrichtung des Rahmens in dessen Profil angeordnet sind. Hierdurch wird die Steifigkeit bzw. Festigkeit des Rahmens in vorteilhafterweise weiter erhöht.

Gemäß einer weiteren bevorzugten Ausführungsform ist vorgesehen, dass auf der Oberseite und/oder der Unterseite des Querträgerelements und/oder an der Bodenplatte zweite Anbindungsstellen zur Befestigung eines Batteriemoduls vorgesehen sind. Besonders bevorzugt sind an den zweiten Anbindungsstellen Anbindungselemente vorgesehen, die eine Festigkeit von wenigstens 300 MPa aufweisen. Ganz besonders bevorzugt weisen die Anbindungselemente wenigstens eine Erhöhung und/oder Vertiefung, insbesondere eine Sicke, zur Steigerung der Steifigkeit auf. Noch mehr bevorzugt sind die Anbindungsstellen aus dem Querträger ausgeformt, insbesondere in Form von Laschen. Hierdurch es vorteilhaft ermöglicht, einen leichten und zugleich stabilen Querträger bereitzustellen, der direkt oder über Abstandshaltemittel indirekt an der Deckelplatte und/oder der Bodenplatte angeordnet ist und über den Batteriemodule befestigbar sind.

Gemäß einer bevorzugten Ausführungsform ist die Deckelplatte lösbar mit dem Rahmen verbunden. Hierdurch wird es in vorteilhafter Weise ermöglich, die Deckelplatte beispielsweise für Wartungsarbeiten abzunehmen. Besonders bevorzugt ist zwischen dem Rahmen und der Deckelplatte wenigstens eine Dichtung, insbesondere umlaufend, angeordnet. Hierdurch wird insbesondere bei einer abnehmbaren Deckelplatte ein wasserdichtes Gehäuse bereitgestellt.

Gemäß einer weiteren bevorzugten Ausführungsform ist vorgesehen, dass das Gehäuse im Wesentlichen quaderförmig ausgebildet ist. Hierdurch ist vorteilhafterweise ein einfacher und modularer Aufbau des Gehäuses möglich.

Der Rahmen ist mehrteilig ausgebildet, wobei der Rahmen vorzugsweise aus wenigstens zwei, insbesondere symmetrischen, Rahmenteilen gefertigt ist. Besonders bevorzugt sind die Rahmenteile form-, kraft- und/oder stoffschlüssig miteinander verbunden, insbesondere verschweißt. Ganz besonders bevorzugt sind die Schweißnähte wenigstens an der Oberseite und/oder der Unterseite des Rahmens entfernt, insbesondere abgeschliffen. Hierdurch wird eine dichte und problemlose Anbindung an die Deckelplatte ermöglicht. Dabei ist vorzugsweise vorgesehen, dass die Dichtung auf dem Rahmen aufgelegt, aufgeklebt, anextrudiert und/oder angespritzt ist.

Besonders bevorzugt ist vorgesehen, dass das Querträgerelement wenigstens teilweise innen eine Verstärkung, insbesondere durch einen Polymer- und/oder Metallschaum und/oder durch ein Blechteil in Form eines geschlossenen Hohlprofils, beispielsweise ein Rohr, oder eines offenen Profils, beispielsweise ein L-Profil, ein Hutprofil und/oder ein Wellblech, umfasst. Hierdurch ist es vorteilhaft möglich, die Crashsicherheit weiter zu verbessern.

Gemäß einer Ausführungsform ist vorgesehen, dass das Gehäuse einen Flüssigkeitssensor umfasst, wobei der Flüssigkeitssensor insbesondere an einem tiefsten Punkt der Bodenplatte angeordnet ist. Besonders bevorzugt umfasst das Gehäuse einen Beschleunigungssensor. Alternativ oder zusätzlich ist das Gehäuse an ein Sensorsystem des Fahrzeugs angebunden. Hierdurch ist es vorteilhaft möglich, einem Unfall vorzubeugen, beispielsweise indem die elektrische Versorgung unterbrochen wird, und/oder einen Unfall zu detektieren, um beispielsweise eine mögliche Beschädigung überprüfen zu lassen, bevor eine Weiterfahrt gestattet wird.

Gemäß einer Ausführungsform ist vorgesehen, dass das Gehäuse Temperierelemente und/oder elektrische Verbindungselemente umfasst. Dabei sind elektrische Verbindungselemente insbesondere elektrische Kabel und/oder elektrische Anschlusselemente. Die Temperierelemente umfassen insbesondere eine Heizung und/oder Kühlung. Besonders bevorzugt sind die Temperierelemente und/oder elektrische Verbindungselemente zwischen der Deckelplatte und dem Querträgerelement, in dem Querträgerelement und/oder zwischen der Bodenplatte und dem Querträgerelement angeordnet. Hierdurch ist es vorteilhafterweise möglich, für den Betrieb einer Batterie benötigte Anschlüsse und/oder Module in das Gehäuse zu integrieren und somit ein besonders kompaktes Gehäuse mit geringem Bauraumbedarf bereitzustellen.

Ein weiterer Gegenstand der vorliegenden Erfindung ist ein Verfahren zur Herstellung eines Gehäuses für eine Fahrzeugbatterie gemäß Anspruch 8, wobei in einem ersten Schritt eine Deckelplatte, eine Bodenplatte, ein Rahmen und wenigstens ein Querträgerelement bereitgestellt werden, wobei in einem ersten Teilschritt des ersten Schrittes der Rahmen aus einem Blech als Rollprofil oder Kantteil profiliert bzw. gekantet wird, besonders bevorzugt wird der Rahmen als C-Profil profiliert bzw. gekantet, wobei in einem zweiten Schritt die Bodenplatte an dem Rahmen angeordnet und, insbesondere wasserdicht, befestigt wird, wobei in einem dritten Schritt das Querträgerelement in den vom Rahmen umschlossenen Raum eingesetzt und mit dem Rahmen und/oder der Bodenplatte verbunden wird, wobei in einem vierten Schritt Batteriemodule in Zwischenräume zwischen dem Rahmen, dem Querträgerelement und der Bodenplatte eingesetzt und befestigt werden, wobei in einem fünften Schritt die Deckelplatte, insbesondere lösbar, mit dem Rahmen verbunden wird. Hierdurch ist es vorteilhaft möglich, ein Gehäuse für eine Fahrzeugbatterie in einfacher und kostengünstiger Weise herzustellen, wobei das Gehäuse stabil, bauraumkompakt und
kostengünstig herstellbar ist.

Erfindungsgemäß ist vorgesehen, dass der Rahmen aus wenigstens zwei Rahmenteilen gefertigt wird, wobei in einem zweiten Teilschritt des ersten Schrittes die Rahmenteile verbunden, insbesondere verschweißt, werden, wobei vorzugsweise die Schweißnähte entfernt, insbesondere abgeschliffen, werden. Besonders bevorzugt sind die Rahmenteile im Wesentlichen symmetrisch. Hierdurch wird ein einfach aufgebauter Rahmen bereitgestellt, der hochstabil ist.

Gemäß einer Ausführungsform ist vorgesehen, dass der Rahmen und die Bodenplatte durch Laserlöten, Laserschweißen und/oder Laser-Hybridschweißen verbunden werden.

Gemäß einer Ausführungsform ist vorgesehen, dass der Rahmen und die Deckelpatte verklebt und/oder verschraubt werden.

Gemäß einer Ausführungsform ist vorgesehen, dass das Querträgerelement mit dem Rahmen durch Lichtbogenschweißen und/oder Laser-Hybridschweißen verbunden wird.

Gemäß einer Ausführungsform ist vorgesehen, dass in dem fünften Schritt eine, insbesondere umlaufende, Dichtung zwischen dem Rahmen und der Deckelplatte angeordnet wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische und perspektivische Explosionsansicht eines Gehäuses gemäß einer beispielhaften Ausführungsform der vorliegenden Erfindung.
- **Figur 2**: zeigt einen schematischen Querschnitt entlang der Schnittlinie A - A des in Figur 1 dargestellten Gehäuses gemäß einer beispielhaften Ausführungsform der vorliegenden Erfindung.
- **Figuren 3a und 3b**: zeigen einen Rahmen in einer schematischen Detailansicht gemäß einer beispielhaften Ausführungsform der vorliegenden Erfindung.
- **Figur 4**: zeigt einen schematischen Querschnitt eines Gehäuses gemäß einer beispielhaften Ausführungsform der vorliegenden Erfindung.
- **Figuren 5a und 5b**: zeigen schematische Querschnitte eines Gehäuses gemäß beispielhafter Ausführungsformen der vorliegenden Erfindung.
- **Figur 6**: zeigt einen schematischen Querschnitt entlang der Schnittlinie B - B eines Gehäuses gemäß einer beispielhaften Ausführungsform der vorliegenden Erfindung.
- **Figur 7**: zeigt einen schematischen Querschnitt entlang der Schnittlinie B - B eines Gehäuses gemäß einer beispielhaften Ausführungsform der vorliegenden Erfindung.
- **Figur 8**: zeigt einen schematischen Querschnitt entlang der Schnittlinie B - B eines Gehäuses gemäß einer beispielhaften Ausführungsform der vorliegenden Erfindung.
- **Figur 9**: zeigt einen schematischen Querschnitt entlang der Schnittlinie B - B eines Gehäuses gemäß einer beispielhaften Ausführungsform der vorliegenden Erfindung.
- **Figuren 10a und 10b**: zeigen Querschnitte eines Abstandshaltemittels gemäß beispielhafter Ausführungsformen der vorliegenden Erfindung.
- **Figur 11**: zeigt ein Verfahren gemäß einer beispielhaften Ausführungsform der vorliegenden Erfindung

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

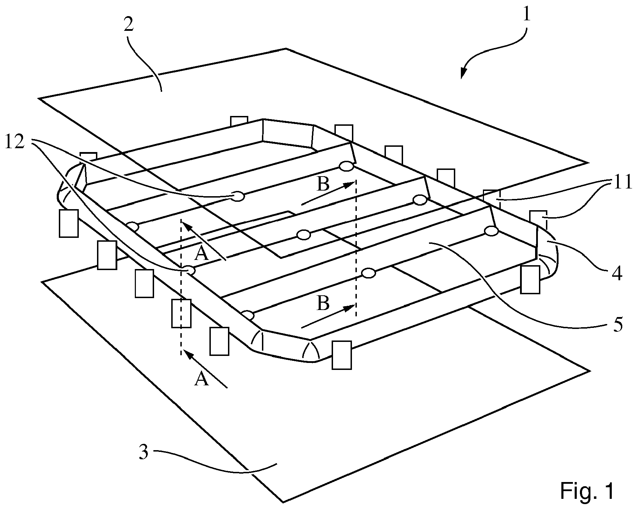

In **Figur 1** ist eine schematische und perspektivische Explosionsansicht eines Gehäuses 1 gemäß einer beispielhaften Ausführungsform der vorliegenden Erfindung dargestellt. Das Gehäuse ist für eine Fahrzeugbatterie vorgesehen, die hier der Übersicht halber nicht dargestellt ist. Das Gehäuse 1 umfasst eine Bodenplatte 3, einen damit fest verbundenen Rahmen 4, in der dargestellten Ausführungsform drei Querträgerelemente 5, die fest mit dem Rahmen 4 verbunden und parallel zu den kurzen Seiten des Rahmens 4 ausgerichtet sind, sowie eine Deckelplatte 2, die lösbar mit dem Rahmen 4 verbunden ist. Der Übersicht halber sind die Elemente hier beabstandet dargestellt.

Das Gehäuse 1 weist ferner erste Anbindungsstellen 11 zur Anbindung an eine Fahrzeugkarosserie 20 auf sowie zweite Anbindungsstellen 12 zur Befestigung von Batteriemodulen 21 in dem Gehäuse 1. Ferner sind vorliegend eine Schnittlinie A - A des Rahmens 4 und eine Schnittlinie B - B eines Querträgerelementes 5 eingezeichnet.

Das Gehäuse 1 ist im Wesentlichen quaderförmig ausgebildet, d.h., die Deckelplatte 2 und die Bodenplatte 3 sind im Wesentlichen rechteckig ausgebildet. Der Rahmen 4 ist als C-Profil ausgeführt und hier an den Ecken jeweils gebogen, wodurch die Stabilität deutlich erhöht wird. Die ersten Anbindungsstellen 11 sind beispielsweise verstärkte Abschnitte des oberen Flansches des C-Profils. Der Rahmen kann einstückig hergestellt sein oder mehrstückig, beispielsweise bestehend aus zwei Rahmenteilen, und ist vorzugsweise aus höherfestem Stahl mit einer Festigkeit von wenigstens 400 MPa hergestellt. Die Querträgerelemente sind hier Bleche aus höherfestem Stahl, ebenfalls mit einer Festigkeit von wenigstens 400 MPa und als Profile mit rechteckigem oder hutförmigen Querschnitt ausgebildet.

Die Bodenplatte 3 ist aus ultrahochfestem Mangan-Bor-legierten Stahl mit einer Festigkeit von wenigstens 780 MPa hergestellt und weist hier in Querrichtung, d.h. parallel zu den kürzeren Seiten des Rechtecks, Versickungen auf zur Steigerung der Beulsteifigkeit. Der Rahmen 4 ist mittels Laserlöten, Laserschweißen und/oder Laser-Hybridschweißen mit der Bodenplatte 3 verbunden.

Die Deckelplatte 2 ist hier aus einem Stahl-Kunststoff-Sandwich hergestellt und weist ebenfalls in Querrichtung Versickungen zur Steigerung der Beulsteifigkeit auf. Die Deckelplatte 2 ist mit dem Rahmen 4 beispielsweise verschraubt, wobei zwischen Rahmen 4 und Deckelplatte 2 eine umlaufende Dichtung 6 angeordnet ist, wobei die Dichtung 6 beispielsweise an den Rahmen 4 anextrudiert ist. An wenigstens einer Stelle des Gehäuses 1, vorzugsweise wenigstens in der Mitte, ist zwischen der Deckelplatte 2 und dem dort angeordneten Querträgerelement 5 ein Abstandhaltemittel 10 angeordnet, um eine ausreichende Stabilität des Gehäuses 1 zu gewährleisten.

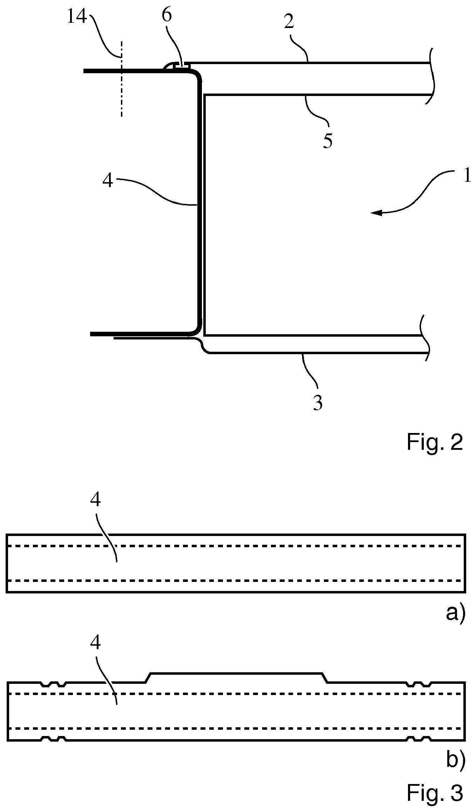

In **Figur 2** ist ein schematischer Querschnitt entlang der Schnittlinie A - A des in Figur 1 dargestellten Gehäuses 1 gemäß einer beispielhaften Ausführungsform der vorliegenden Erfindung dargestellt. Hier ist gut zu erkennen, dass der Rahmen 4 als C-Profil ausgeführt ist. Der Rahmen 4 ist mit der Deckelplatte 2 mittels Befestigungsmitteln 14, hier Schrauben, lösbar verbunden, wobei zwischen Deckelplatte 2 und Rahmen 4 zur Erzielung einer Wasserdichtigkeit eine Dichtung 6 umlaufend angeordnet ist. Somit kann die Deckelplatte 2 beispielsweise zu Wartungszwecken abgenommen werden und anschließend wieder mit dem Rahmen 4 verbunden werden, wobei das Gehäuse 1 vorher und nachher wasserdicht ist. An dem Rahmen 4 ist das Querträgerelement 5 befestigt, beispielsweise verschweißt. Das Querträgerelement 5 kann direkt auf der Bodenplatte aufliegen oder von dieser, wie hier dargestellt, beabstandet sein, beispielsweise über Abstandshaltemittel 10.

In den **Figuren 3a und 3b** ist jeweils ein Rahmen 4 in einer schematischen Detailansicht gemäß einer beispielhaften Ausführungsform der vorliegenden Erfindung dargestellt. In beiden Figuren ist der Rahmen 4 in seinem Ausgangszustand als flaches Blech dargestellt, wobei die gestrichelten Linien anzeigen, wo das Blech profiliert bzw. gekantet wird. In **Figur 3a** weist der Rahmen einen konstanten Querschnitt auf, während er in **Figur 3b** einen entlang seiner Haupterstreckungsrichtung veränderlichen Querschnitt aufweist. Gemäß den dargestellten Ausführungsformen ist der Rahmen 4 einstückig ausgeführt, jedoch kann er auch mehrstückig ausgeführt sein. Beispielsweise kann der Rahmen 4 in **Figur 3b** aus zwei im Wesentlichen symmetrischen Rahmenteilen bestehen, die miteinander verbunden, vorzugsweise verschweißt werden. Die Schweißnähte werden dabei wenigstens an den zur Verbindung mit der Deckelplatte 2 und der Bodenplatte 3 vorgesehenen Stellen entfernt, beispielsweise abgeschliffen, um ebene Dichtflächen zu erzielen. Alternativ stellen die dargestellten Ausführungsformen Rahmenteile dar, von denen mehrere aneinandergefügt werden, um den Rahmen 4 herzustellen. Die Ausführungsform gemäß **Figur 3b** weist einen verlängerten Flansch in der Mitte auf, da dort erste Anbindungsstellen 11 zur Anbindung des Gehäuses 1 an die Fahrzeugkarosserie 20 vorgesehen sind. Die Einschnitte zu beiden Seiten des mittleren Flansches vereinfachen das spätere Profilbiegen, um den umlaufenden Rahmen 4 herzustellen.

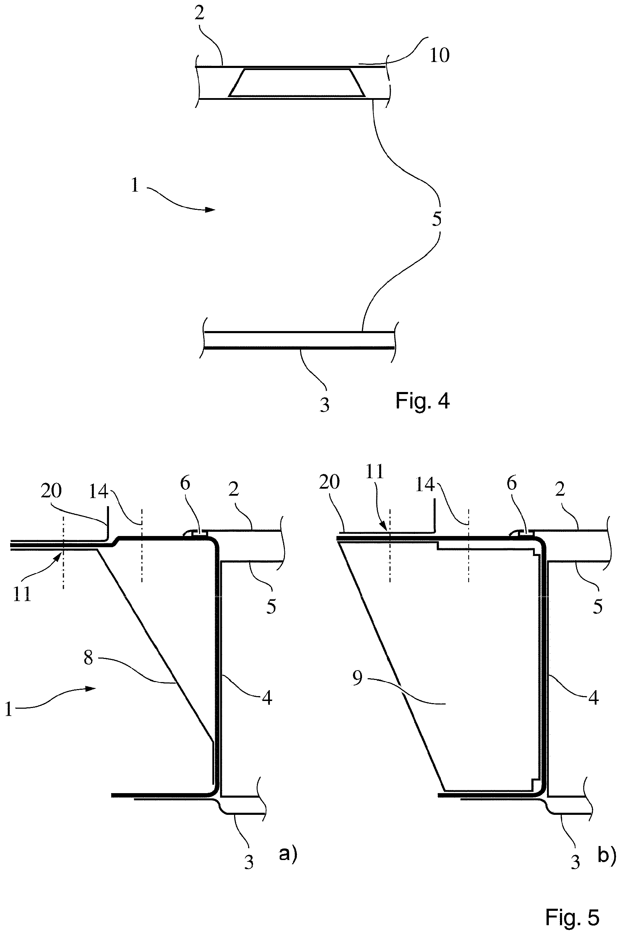

In **Figur 4** ist ein schematischer Querschnitt eines Gehäuses 1 gemäß einer beispielhaften Ausführungsform der vorliegenden Erfindung dargestellt. Zu sehen ist dabei eine Stelle, an der zwischen der Deckelplatte 2 und dem Querträgerelement 5 ein Abstandshaltemittel 10 angeordnet ist. Gemäß der dargestellten Ausführungsform sind die Bodenplatte 3 und das Querträgerelement 5 voneinander beabstandet. Das Abstandshaltemittel 10 weist hier einen hutförmigen Querschnitt auf und kann mit der Deckelplatte 2 und/oder dem Querträgerelement 5 verklebt, verschraubt und/oder verclipst sein.

In den **Figuren 5a und 5b** sind schematische Querschnitte eines Gehäuses 1 gemäß beispielhafter Ausführungsformen der vorliegenden Erfindung dargestellt. Dabei ist das Gehäuse 1 insbesondere im Bereich erster Anbindungsstellen 11 zur Verbindung des Gehäuses 1 mit der Fahrzeugkarosserie 20 dargestellt. Dabei können das Gehäuse 1 und die Fahrzeugkarosserie 20 beispielsweise verschraubt sein. Wie deutlich zu erkennen ist, weist der Rahmen 4 an der ersten Anbindungsstelle 11 einen verlängerten Flansch auf. Zur Stabilisierung und Erhöhung der Festigkeit sind an den ersten Anbindungsstellen 11 Verstärkungselemente wie zusätzliche Bleche oder Ringe angeordnet. Zusätzlich ist in **Figur 5a** ein im Querschnitt diagonal verlaufendes Blech 8 dargestellt, welches die Kräfte, die auf die ersten Anbindungsstellen 11 wirken, ableitet. In **Figur 5b** ist zu demselben Zweck ein Schottblech 9 mit einer Erstreckung in der Zeichenebene, also senkrecht zu der Haupterstreckung des Rahmens 4 vorgesehen. Die beiden Ausführungsformen können dabei alternativ oder kumulativ vorgesehen sein. In letzterem Fall sind die dargestellten Stellen beispielsweise entlang des Rahmens versetzt vorgesehen, um eine möglichst gute Kraftableitung zu ermöglichen. Vorzugsweise ist an jedem Anbindungspunkt ein Schottblech 9 vorgesehen. Zum Toleranzausgleich sind die Durchmesser der Löcher im Rahmen 4 vorzugsweise mindestens 4 mm und maximal 10 mm größer als der Schraubendurchmesser. Hierdurch wird ein Toleranzausgleich von mindestens 2 mm und maximal 5 mm in jede Richtung ermöglicht.

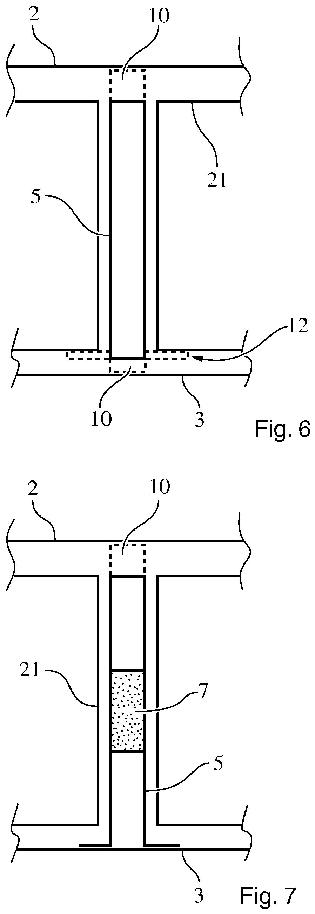

In **Figur 6** ist ein schematischer Querschnitt entlang der Schnittlinie B - B eines Gehäuses 1 gemäß einer beispielhaften Ausführungsform der vorliegenden Erfindung dargestellt. Zu sehen ist dabei insbesondere eine mögliche Anbindung von Batteriemodulen 21 in dem Gehäuse 1. Hier ist ebenfalls zwischen Querträgerelement 5 und Deckelplatte 2 sowie zwischen Querträgerelement 5 und Bodenplatte 3 jeweils ein Abstandshaltemittel 10 angeordnet. Zusätzlich sind zur Ausbildung von zweiten Anbindungsstellen 12 Anbindungslaschen aus dem Querträgerelement 5 ausgeformt, auf denen die Batteriemodule 21 anliegen und mit denen sie verbunden sind. Zwischen Deckelplatte 2 und Batteriemodul 21 ist dabei ein Freiraum vorgesehen, in welchem beispielsweise eine Verkabelung der Batteriemodule 21 geführt sein kann.

In **Figur 7** ist ein schematischer Querschnitt entlang der Schnittlinie B - B eines Gehäuses 1 gemäß einer beispielhaften Ausführungsform der vorliegenden Erfindung dargestellt. Dabei ist hier in dem Querträgerelement 5 innen eine Verstärkung 7, beispielsweise in Form eines Polymer- und/oder Metallschaums, vorgesehen. Hierdurch können unfallbedingte Kräfte besser aufgenommen werden. Ferner ist das Querträgerelement 5 vorliegend als Hutprofil ausgebildet und liegt direkt an der Bodenplatte 3 an und ist über die Flansche des Querträgerelements 5 mit der Bodenplatte 3 verbunden.

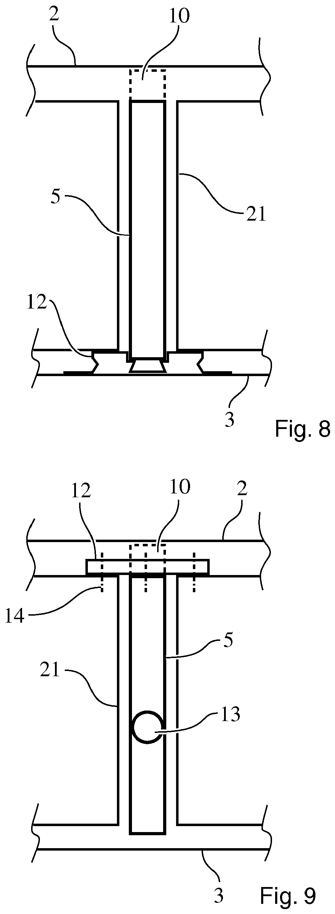

In **Figur 8** ist ein schematischer Querschnitt entlang der Schnittlinie B - B eines Gehäuses 1 gemäß einer beispielhaften Ausführungsform der vorliegenden Erfindung dargestellt. Hier ist das Querträgerelement 5 über ein Abstandshaltemittel 10, welches seitlich Sicken zur gezielten Deformation im Crashfall aufweist, auf der Bodenplatte 3 gelagert. Hierdurch wird ein Bereich bereitgestellt, in welchem sich das Abstandshaltemittel 10 im Falle eines Unfalls gezielt verformen kann und somit Energie absorbieren kann ohne dass es zu einer Beschädigung der Batteriemodule 21 kommt. Im Zuge einer Reparatur kann dann einfach die Deckelplatte 2 entfernt werden und die verformten Abstandshaltemittel 10 durch neue ausgetauscht werden.

In **Figur 9** ist ein schematischer Querschnitt entlang der Schnittlinie B - B eines Gehäuses 1 gemäß einer beispielhaften Ausführungsform der vorliegenden Erfindung dargestellt. Hier ist oberhalb des Querträgerelements 5 ein Befestigungselement vorgesehen, an welchem die zweiten Anbindungsstellen 12 vorgesehen sind. Zusätzlich ist in dem Querträgerelement 5 ein Rohr dargestellt, welches als Temperierelement 13 fungiert, beispielsweise zur Durchleitung einer Kühlflüssigkeit und damit zur Kühlung der Batterie.

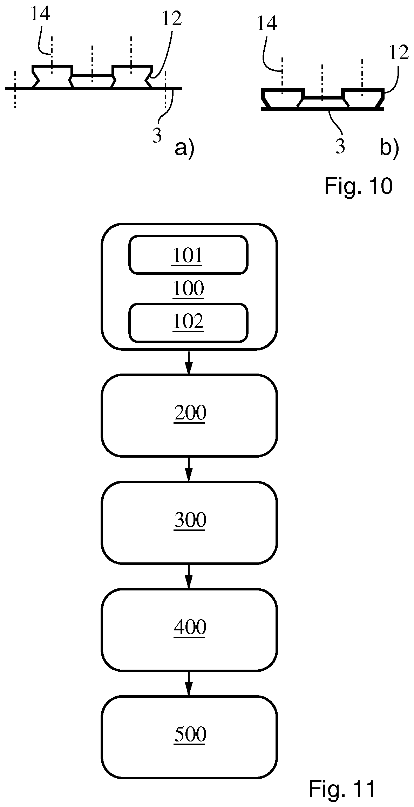

In den **Figuren 10a und 10b** sind Querschnitte eines Abstandshaltemittels 10 gemäß beispielhafter Ausführungsformen der vorliegenden Erfindung dargestellt. Dabei entsprechen die Abstandshaltemittel 10 im Wesentlichen der in Figur 8 dargestellten Ausführungsform, weswegen auf die diesbezüglichen Ausführungen verwiesen wird. In Figur 10a ist dabei das Abstandshaltemittel 10 als Aluminium-Strangpress-Bauteil und in Figur 10b als Kunststoff-Spritzguss-Bauteil ausgeführt und etwa 15 mm bis 50 mm tief, falls nur ein Batteriemodul über das Abstandshaltemittel 10 angebunden wird, und etwa 40 mm bis 100 mm tief, falls zwei Batteriemodule angebunden werden. Die Abstandshaltemittel 10 stellen hier also gleichzeitig zweite Anbindungsstellen 12 bereit. Wie bereits oben beschrieben können die Abstandshaltemittel 10 ferner Sicken als Sollverformungsstellen aufweisen.

In **Figur 11** ist ein Verfahren gemäß einer beispielhaften Ausführungsform der vorliegenden Erfindung dargestellt. Dabei werden in einem ersten Schritt 100 die Elemente eines Gehäuses 1 bereitgestellt. Dabei handelt es sich um eine Deckelplatte 2, eine Bodenplatte 3, wenigstens ein Querträgerelement 5 und einen Rahmen 4, der wiederum in einem ersten Teilschritt 101 des ersten Schrittes 100 aus einem Blech beispielsweise als mehrere C-förmige Rollprofile oder Kantteile profiliert bzw. gekantet wird. In einem zweiten Teilschritt 102 des ersten Schrittes 100 werden die Rahmenteile miteinander verbunden, vorzugsweise verschweißt. Die Schweißnähte werden dabei insbesondere an den zur Anbindung mit den weiteren Elementen des Gehäuses 1 vorgesehen Stellen entfernt, beispielsweise abgeschliffen, um eben Dichtflächen zu gewährleisten.

In einem zweiten Schritt 200 wird die Bodenplatte (3) an dem Rahmen 4 angeordnet und, insbesondere wasserdicht, mit diesem verbunden. In einem dritten Schritt 300 wird das wenigstens eine Querträgerelement 5 in den Rahmen 4 eingesetzt und mit diesem und/oder der Bodenplatte verbunden, beispielsweise über Laserlöten und/oder Laserschweißen.

In einem vierten Schritt 400 werden Batteriemodule 21 in Zwischenräume zwischen dem Rahmen 4, dem Querträgerelement 5 und der Bodenplatte 3 eingesetzt und direkt oder indirekt, z.B. über Abstandshaltemittel 10 wie in den Figuren 8 und 10 gezeigt und beschrieben, befestigt.

In einem fünften Schritt 500 wird schließlich die Deckelplatte 2, insbesondere lösbar, mit dem Rahmen 4 verbunden, beispielsweise verschraubt, wobei vorzugsweise zwischen Deckelplatte 2 und Rahmen 4 eine umlaufende Dichtung 6 angeordnet wird.

### Bezugszeichenliste

- 1: Gehäuse
- 2: Deckelplatte
- 3: Bodenplatte
- 4: Rahmen
- 5: Querträgerelement
- 6: Dichtung
- 7: Verstärkung
- 8: Diagonalbleche
- 9: Schottbleche
- 10: Abstandshaltemittel
- 11: erste Anbindungsstellen
- 12: zweite Anbindungsstellen
- 13: Temperierelement
- 14: Befestigungsmittel
- 20: Karosserie
- 21: Batteriemodul

- 100: erster Schritt
- 101: erster Teilschritt
- 102: zweiter Teilschritt
- 200: zweiter Schritt
- 300: dritter Schritt
- 400: vierter Schritt
- 500: fünfter Schritt

- A - A: erster Schnitt
- B - B: zweiter Schnitt

## Patentansprüche

1. Gehäuse (1) für eine Fahrzeugbatterie mit einer Deckelplatte (2) und einer Bodenplatte (3), wobei zwischen der Deckelplatte (2) und der Bodenplatte (3) ein Rahmen (4) angeordnet ist, wobei der Rahmen (4) mit der Deckelplatte (2) und der Bodenplatte (3) verbunden ist, wobei in dem vom Rahmen umschlossenen Raum wenigstens ein Querträgerelement (5) angeordnet ist und wobei der Rahmen (4) als Rollprofil und/oder Kantteil ausgebildet ist,
**dadurch gekennzeichnet, dass**
die Bodenplatte (3) aus einem gehärteten Mangan-Bor-legierten Stahl mit einer Zugfestigkeit von wenigstens 780 MPa gefertigt ist.

2. Gehäuse (1) nach Anspruch 1, **dadurch gekennzeichnet, dass** der Rahmen (4) erste Anbindungsstellen (11) zur Anbindung an eine Fahrzeugkarosserie aufweist, wobei der Rahmen (4) wenigstens einen Flansch aufweist, wobei die ersten Anbindungsstellen (11) an dem Flansch vorgesehen sind.

3. Gehäuse (1) nach einem der vorhergehenden Ansprüche, **dadurch gekennzeichnet, dass** auf der Oberseite und/oder der Unterseite des Querträgerelements (5) und/oder an der Bodenplatte (3) zweite Anbindungsstellen (12) zur Befestigung eines Batteriemoduls vorgesehen sind.

4. Gehäuse (1) nach einem der vorhergehenden Ansprüche, **dadurch gekennzeichnet, dass** das Gehäuse (1) im Wesentlichen quaderförmig ausgebildet ist.

5. Gehäuse (1) nach einem der vorhergehenden Ansprüche, **dadurch gekennzeichnet, dass** der Rahmen (4) aus wenigstens zwei, symmetrischen, Rahmenteilen gefertigt ist.

6. Gehäuse (1) nach einem der vorhergehenden Ansprüche, **dadurch gekennzeichnet, dass** zwischen dem Rahmen (4) und der Deckelplatte (2) wenigstens eine Dichtung (6), umlaufend, angeordnet ist.

7. Gehäuse (1) nach einem der vorhergehenden Ansprüche, **dadurch gekennzeichnet, dass** eine Verstärkung (7) durch einen Polymer- und/oder Metallschaum und/oder durch ein Blechteil in Form eines geschlossenen Hohlprofils oder eines offenen Profils gebildet ist.

8. Verfahren zur Herstellung eines Gehäuses (1) für eine Fahrzeugbatterie, wobei in einem ersten Schritt (100) eine Deckelplatte (2), eine Bodenplatte (3), wobei die Bodenplatte (3) aus einem gehärteten Mangan-Bor-legierten Stahl mit einer Zugfestigkeit von wenigstens 780 MPa gefertigt ist, ein Rahmen (4) und wenigstens ein Querträgerelement (5) bereitgestellt werden, wobei in einem ersten Teilschritt (101) des ersten Schrittes (100) der Rahmen aus einem Blech als Rollprofil oder Kantteil profiliert bzw. gekantet wird, wobei der Rahmen (4) aus wenigstens zwei Rahmenteilen gefertigt wird, wobei in einem zweiten Teilschritt (102) des ersten Schrittes (100) die Rahmenteile verschweißt werden, wobei in einem zweiten Schritt (200) die Bodenplatte (3) an dem Rahmen (4) angeordnet und befestigt wird, wobei in einem dritten Schritt (300) das Querträgerelement (5) in den vom Rahmen (4) umschlossenen Raum eingesetzt und mit dem Rahmen (4) und/oder der Bodenplatte (3) verbunden wird, wobei in einem vierten Schritt (400) Batteriemodule in Zwischenräume zwischen dem Rahmen (4), dem Querträgerelement (5) und der Bodenplatte (3) eingesetzt und befestigt werden, wobei in einem fünften Schritt (500) die Deckelplatte (2) mit dem Rahmen (4) verbunden wird.

9. Verfahren nach Anspruch 8, wobei die Schweißnähte abgeschliffen werden.

## Claims

1. Housing (1) for a vehicle battery with a cover plate (2) and a bottom plate (3), a frame (4) being arranged between the cover plate (2) and the bottom plate (3), the frame (4) being connected to the cover plate (2) and the bottom plate (3), at least one crossmember element (5) being arranged in the space which is enclosed by the frame, and the frame (4) being configured as a rolled profile and/or folded part, **characterized in that** the bottom plate (3) is manufactured from a hardened manganese-boron-alloyed steel with a tensile strength of at least 780 MPa.

2. Housing (1) according to Claim 1, **characterized in that** the frame (4) has first attachment points (11) for the attachment to a vehicle body, the frame (4) having at least one flange, the first attachment points (11) being provided on the flange.

3. Housing (1) according to either of the preceding claims, **characterized in that** two attachment points (12) for fastening a battery module are provided on the upper side and/or the lower side of the crossmember element (5) and/or on the bottom plate (3).

4. Housing (1) according to one of the preceding claims, **characterized in that** the housing (1) is of substantially cuboid configuration.

5. Housing (1) according to one of the preceding claims, **characterized in that** the frame (4) is manufactured from at least two symmetrical frame parts.

6. Housing (1) according to one of the preceding claims, **characterized in that** at least one seal (6) is arranged peripherally between the frame (4) and the cover plate (2).

7. Housing (1) according to one of the preceding claims, **characterized in that** a reinforcement (7) is formed by way of a polymer and/or metal foam and/or by way of a sheet metal part in the form of a closed hollow profile or an open profile.

8. Method for producing a housing (1) for a vehicle battery, a cover plate (2), a bottom plate (3), the bottom plate (3) being manufactured from a hardened manganese-boron-alloyed steel with a tensile strength of at least 780 MPa, a frame (4) and at least one crossmember element (5) being provided in a first step (100), the frame being profiled or folded from a metal sheet as a rolled profile or folded part in a first part step (101) of the first step (100), the frame (4) being manufactured from at least two frame parts, the frame parts being welded in a second part step (102) of the first step (100), the bottom plate (3) being arranged on and fastened to the frame (4) in a second step (200), the crossmember element (5) being inserted into the space which is enclosed by the frame (4) and being connected to the frame (4) and/or the bottom plate (3) in a third step (300), battery modules being inserted and fastened in intermediate spaces between the frame (4), the crossmember element (5) and the bottom plate (3) in a fourth step (400), and the cover plate (2) being connected to the frame (4) in a fifth step (500).

9. Method according to Claim 8, the welded seams being ground down.

## Revendications

1. Boîtier (1) pour une batterie de véhicule, comprenant une plaque de recouvrement (2) et une plaque de base (3), un cadre (4) étant disposé entre la plaque de recouvrement (2) et la plaque de base (3), le cadre (4) étant relié à la plaque de recouvrement (2) et à la plaque de base (3), au moins un élément de support transversal (5) étant disposé dans l'espace entouré par le cadre, et le cadre (4) étant réalisé sous la forme d'un profilé laminé et/ou d'une pièce pliée,
**caractérisé en ce que** la plaque de base (3) est fabriquée à partir d'un alliage d'acier trempé au manganèse et au bore ayant une résistance à la traction d'au moins 780 MPa.

2. Boîtier (1) selon la revendication 1, **caractérisé en ce que** le cadre (4) présente des premiers points d'attache (11) à attacher à une carrosserie de véhicule, le cadre (4) présentant au moins une bride, les premiers points d'attache (11) étant prévus sur la bride.

3. Boîtier (1) selon l'une quelconque des revendications précédentes, **caractérisé en ce que** sur la face supérieure et/ou la face inférieure de l'élément de support transversal (5) et/ou sur la plaque de base (3), des deuxièmes points d'attache (12) sont prévus pour la fixation d'un module de batterie.

4. Boîtier (1) selon l'une quelconque des revendications précédentes, **caractérisé en ce que** le boîtier (1) est réalisé de manière substantiellement parallélépipédique.

5. Boîtier (1) selon l'une quelconque des revendications précédentes, **caractérisé en ce que** le cadre (4) est fabriqué à partir d'au moins deux parties de cadre symétriques.

6. Boîtier (1) selon l'une quelconque des revendications précédentes, **caractérisé en ce qu'**au moins un joint (6) périphérique est disposé entre le cadre (4) et la plaque de recouvrement (2).

7. Boîtier (1) selon l'une quelconque des revendications précédentes, **caractérisé en ce qu'**un élément de renforcement (7) est formé par une mousse polymère et/ou métallique et/ou par une pièce de tôle sous la forme d'un profilé creux fermé ou d'un profilé ouvert.

8. Procédé de fabrication d'un boîtier (1) pour une batterie de véhicule, dans lequel, dans une première étape (100), une plaque de recouvrement (2), une plaque de base (3), la plaque de base (3) étant fabriquée à partir d'un alliage d'acier trempé au manganèse et au bore ayant une résistance à la traction d'au moins 780 MPa, un cadre (4) et au moins un élément de support transversal (5) sont fournis, dans lequel, dans une première étape partielle (101) de la première étape (100), le cadre est profilé ou plié à partir d'une tôle sous la forme d'un profilé laminé ou d'une pièce pliée, le cadre (4) étant fabriqué à partir d'au moins deux parties de cadre, dans lequel, dans une deuxième étape partielle (102) de la première étape (100), les parties de cadre sont soudées, dans lequel, dans une deuxième étape (200), la plaque de base (3) est disposée sur et fixée au cadre (4), dans lequel, dans une troisième étape (300), l'élément de support transversal (5) est inséré dans l'espace entouré par le cadre (4) et relié au cadre (4) et/ou à la plaque de base (3), dans lequel, dans une quatrième étape (400), des modules de batterie sont insérés et fixés dans des espaces intermédiaires entre le cadre (4), l'élément de support transversal (5) et la plaque de base (3), dans lequel, dans une cinquième étape (500), la plaque de recouvrement (2) est reliée au cadre (4).

9. Procédé selon la revendication 8, dans lequel les joints soudés sont rectifiés.
